# EUROPÄISCHE PATENTSCHRIFT

(11) **EP 2 586 110 B1**
(45) Veröffentlichungstag und Bekanntmachung des Hinweises auf die Patenterteilung: **28.01.2015**
(21) Anmeldenummer: 11734031.5
(22) Anmeldetag: 16.06.2011
(51) Int. Cl.: H02B 11/133

(54) **VERRIEGELUNGSVORRICHTUNG FÜR EINE SCHALTSCHRANKTÜR**
LOCKING DEVICE FOR A SWITCH CABINET DOOR
DISPOSITIF DE VERROUILLAGE POUR UNE PORTE D'ARMOIRE DE DISTRIBUTION

(30) Priorität: 26.06.2010 DE 102010025240
(43) Veröffentlichungstag der Anmeldung: 01.05.2013
(73) Patentinhaber: Eaton Electrical IP GmbH & Co. KG, 12529 Schönefeld (DE)
(72) Erfinder: KUTSCHE, Wolfgang, 53919 Weilerswist (DE)
(74) Vertreter: Eaton IP Group EMEA
(86) Internationale Anmeldenummer: PCT/EP2011/060067
(87) Internationale Veröffentlichungsnummer: WO 2011/161005

(56) Entgegenhaltungen:
- EP-A1- 0 167 667
- DE-A1-102006 054 637
- DE-B3-102006 012 056
- Merlin Gerin: "Katalog ZXKMASTERPACT; Leistungsschalter und Leistungstrennschalter für Niederspannungsnetze - Masterpact NT und NW 800 A bis 6300 A", , 1. Februar 2004 (2004-02-01), XP55017944, Gefunden im Internet: URL:http://www.fanenbruck.org/files/downlo ads/2schuetzen_schalten/compact_masterpact /Masterpact 600-6300A/katalog_dt.pdf [gefunden am 2012-01-30] in der Anmeldung erwähnt

## Beschreibung

Die Erfindung betrifft eine Verriegelungsvorrichtung für eine Schaltschranktür, bzw. für einen Türrahmen eines in einem Schaltschrank auf einer Ausfahreinrichtung - in einem Träger oder Sockel - zwischen einer Betriebsstellung, in der die Hauptstrombahnen und die Hilfsstrombahnen geschlossen sind, einer Teststellung, in der die Hauptstrombahnen getrennt und die Hilfsstrombahnen geschlossen sind, und einer Getrenntstellung, in der die Hauptstrombahnen und die Hilfsstrombahnen getrennt sind, bewegbar angeordneten elektrischen, mehrpoligen Leistungsschalter, insbesondere für Niederspannung.

Bei einer ersten Verriegelungsvorrichtung (DE 19530682 A1) ist der Zugang zum eingeschalteten Leistungsschalter nicht möglich, da ein Zugriff mit einem Sicherheitsschlüssel an einen Schließzylinder gesperrt ist.

Allerdings ist es in gewissen Fällen erwünscht, einem Elektrofachmann zu Reparatur-oder Abschaltzwecken den Zugang zu ermöglichen. Hierzu sind aus dem Stand der Technik verschiedene Verriegelungsvorrichtung mit unterschiedlichen Ausgestaltungen bekannt.

Es ist beispielsweise in der DD 248002 A eine Verriegelung einer Einschubeinheit gezeigt, bei der der Zugang zum Leistungsschalter gesperrt ist, solange der Leistungsschalter in Stellung EIN ist. Mit einem Spindeltrieb lässt sich ein Sperrhebel durch Seilzug aushebeln.

Nach der Darstellung in der DE 3536855 A1 sind Bedienelemente für eine Entriegelung vorhanden, die hinter einem Schieber von der Schranktürseite zugänglich sind.

Ein weiterer Stand der Technik in Ausbildung des Leistungsschalters Masterpact - NT und NW 800 bis 6300 A - der Fa. Merlin Gerin (Katalog ZXKMASTERPACT), von der die Anmeldung ausgeht, besteht darin, dass eine Sicherungseinrichtung vorhanden ist. Sie besteht aus einem an einer Schaltschrankseitenwand befestigten, mit einer Klinke versehenen Schwenkriegel und, einer an der Schaltschranktür-Innenseite von einem Lager gehaltenen und mit der Klinke verhakenden, die Sperrung des Zugangs herstellenden Verriegelungslasche. Hierbei besteht die Hilfsentsicherung darin, dass die Verriegelungslasche im Lager in einer Tür-Sicherungsstellung fixiert ist, und die Tür-Sicherungsstellung mit einem einfachen Hilfsentsicherungswerkzeug von der Außenseite der Schaltschranktür gelöst werden kann.

Dieser und ähnlicher Stand der Technik haben Nachteile dadurch, dass der Angriff auf die Verriegelungsvorrichtung von außen häufig einfach, auch für unausgebildete Bedienpersonen möglich ist und dass dabei lose Teile ins Innere des Schaltschranks fallen können. Letzteres ist kritisch, da spannungführende Teile überbrückt werden und damit elektrotechnische Sicherheitskriterien verletzt sein können.

Es ist die Aufgabe der Erfindung, eine Weiterbildung des Standes der Technik anzugeben, die gegenüber Sicherheitsaspekten optimal gestaltet ist und bei der vorzugsweise der Zugang zur Sicherungseinrichtung der Verriegelung verdeckt oder sogar unsichtbar gestaltet ist.

Die Lösung der Aufgabe findet sich im Hauptanspruch, wobei vorteilhafte Ausgestaltungen in Unteransprüchen formuliert sind.

Die Stellungen der Ausfahreinrichtung sind so, dass die Verriegelungsvorrichtung einen Schaltschrankzugang in der Betriebsstellung und in der Teststellung sperrt und den Schaltschrankzugang in der Getrenntstellung freigibt.

Es ist eine Sicherungseinrichtung für die Verriegelungsvorrichtung vorhanden, die bei Betätigung einer Hilfsentsicherung von der Außenseite der Schaltschranktür aus in den beiden Stellungen Betriebsstellung (C) und Teststellung (T) auch in den beiden gesperrten Stellungen (C, T) den Schaltschrankzugang ermöglicht. Hierbei besteht die Sicherungseinrichtung aus
- einem an einer senkrechten Seitenwand des Schaltschranks befestigten, mit einer Klinke versehenen Schwenkriegel,
- und einer an der Innenseite der Schaltschranktür von einem Lager gehaltenen und mit der Klinke verhakenden, die Sperrung des Zugangs herstellenden Verriegelungslasche, wobei der Schwenkriegel durch Eigengewicht in Tür-Sicherungsstellung, vorzugsweise waagerecht liegt,
- und die Hilfsentsicherung darin besteht, dass die Verriegelungslasche im Lager in einer mit einem von der Außenseite der Schaltschranktür mit einem Hilfsentsicherungswerkzeug zu verändernde Stellung in der Tür-Sicherungsstellung fixiert ist.

Als wesentlicher Kern der Erfindung wird betrachtet, dass die Verriegelungslasche als Wippe in dem Lager drehbar gehalten ist. In der Halterung in dem Lager kann die Verriegelungslasche eine erste instabile und eine zweite stabile Lage einnehmen. Die erste instabile Lage wird durch Befestigung der Wippe an der Schaltschranktür solange gesichert, bis die Befestigung gelöst ist. In der ersten Lage verhakt die Verriegelungslasche mit dem Schwenkriegel, wodurch eine den Schaltschrankzugang sperrende Tür-Verriegelungsstellung entsteht. Durch Lösen der Befestigung wird die gesicherte erste Lage freigegeben und die Wippe dreht sich durch Eigengewicht in die stabile Lage, wobei keine Verhakung zwischen Klinke und Verriegelungslasche mehr vorliegt. Es entsteht eine den Schaltschrankzugang freigebende Tür-Freigabestellung. Das Lösen der Befestigung soll nur mit einem Hilfsentsicherungswerkzeug möglich sein. Vorzugsweise soll die Befestigung an der Schaltschranktür von außen nicht sichtbar sein.

Mit der erfindungsgemäßen Ausbildung der Sicherungseinrichtung ist in der befestigten Lage die Drehung der Verriegelungslasche durch Eigengewicht in die Tür-Freigabestellung verhindert. Nur mittels der Hilfsentsicherung ist es möglich, in den Stellungen des Leistungsschalters, in denen der Zugang zum Schaltschrank gesperrt ist, die Schaltschranktür zu öffnen.

Die Anordnung kann weitere Ergänzungen und vorteilhafte Ausgestaltungen umfassen, von denen jede einzeln oder mehrere gemeinsam verwirklicht sein können.

Ausgestaltungen sind im weiteren formuliert:

Die Verriegelungslasche ist als Wippe mit Lagerbolzen ausgebildet, wobei der Lagerbolzen in einer Lagerbohrung im Halter gehalten ist, und die Verriegelungslasche als U-förmige Verriegelungslasche mit zwei senkrecht angeordneten Schenkeln ausgebildet ist. Der Rücken der Wippe trägt den Lagerbolzen außerhalb des Schwerpunkts der Wippe. Der eine Schenkel tritt als Riegelhaken mit der Klinke des Schwenkriegels in Wirkverbindung und der andere Schenkel wird innen an der Schaltschranktür von der Befestigung in Tür-Sicherungsstellung gehalten.

Eine Befestigung des Lagers der Verriegelungslasche kann als magnetische Vorrichtung bestehend aus einem an den Innenseite der Schaltschranktür angeordneten Magnetblech und einem im Halter eingebrachten Haltemagnet gebildet sein. Hier wird die Verriegelungslasche durch Zusammenwirkung des Haltemagneten mit dem Magnetblech in Tür-Sicherungsstellung gehalten und die Befestigung der Verriegelungslasche ist mit einem die Haltekraft des Haltemagneten überwindenden magnetischen Hilfsentsicherungswerkzeug lösbar.

Eine andere Befestigung des Lagers der Verriegelungslasche kann in Form einem die Schaltschranktür und die Verriegelungslasche durchdringenden und die Verriegelungslasche in Tür-Sicherungsstellung im Lager haltenden Schraubbolzen bestehen. In dieser Ausführung ist der Schraubbolzen mit einem, nur mit dem Hilfsentsicherungswerkzeug zu betätigenden Schraubenkopf ausgebildet. Vorzugsweise ist der Schraubenkopf in einem Vielzackenprofil ausgebildet und das Hilfsentsicherungswerkzeug hat einen korrespondieren Werkzeugkopf mit Schrauben-Mitnahmeprofil. Der Schraubenkopf und der korrespondiere Werkzeugkopf kann als TORX-Modell oder in ähnlicher bekannten Struktur ausgebildet sein.

Der Halter kann an der Schaltschranktür verschraubt oder verschweißt sein.

An der Ausfahreinrichtung oder an dem Leistungsschalter kann ein Steuerbolzen vorhanden sein, der während der Ausfahrbewegung der Ausfahreinrichtung bei Erreichen der Getrenntstellung (DC) in Wirkverbindung tritt mit einer am Schwenkriegel angeordneten Steuerkontur, wodurch der Schwenkriegel von der verhakten in die unverhakte Stellung mit der Verriegelungslasche tritt, wodurch die Sicherungseinrichtung in eine Tür-Freigabestellung gebracht wird.

Die Schaltschranktür kann um eine senkrechte Achse drehbar in mindestens einem Scharnier gelagert sein, wobei dann die Sicherungseinrichtung an der dem mindestens einen Scharnier gegenüberliegenden Seite der Schaltschranktür angeordnet ist. Als Alternative kann auch je eine Sicherungseinrichtung zu beiden Seiten des Einschubrahmens angeordnet sein.

Die Erfindung ist in mehrere Figuren dargestellt, wobei diese im Einzelnen zeigen:

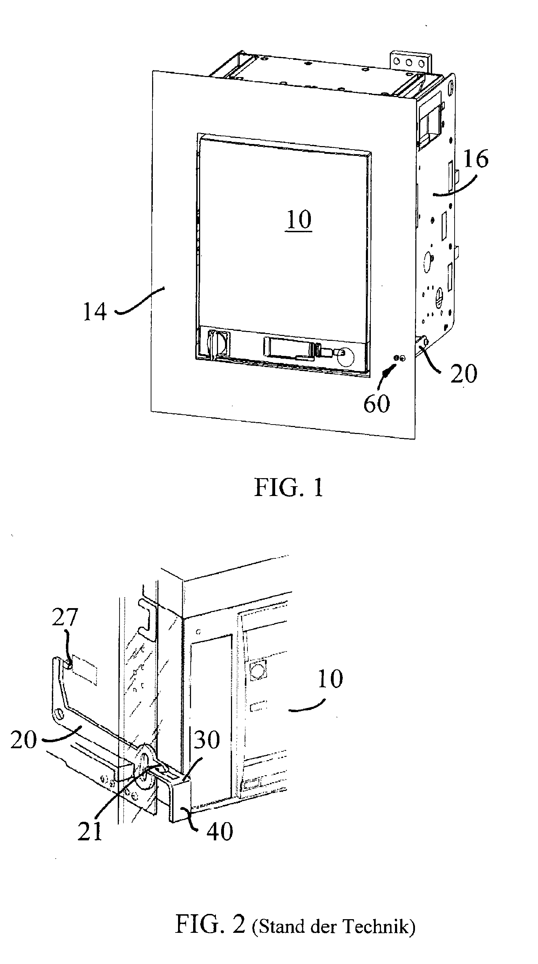

Fig. 1: Frontansicht auf Schaltschrank;
Fig. 2: Stand der Technik;
Fig. 3: Detailansicht der Verriegelungsvorrichtung von hinten;
Fig. 4A, 4B und 4C: drei Stellungen des Leistungsschalters;
Fig. 5A: Bewegung der Ausfahreinrichtung und Freigabe des Schwenkriegels;
Fig. 5B: magnetische Befestigung der Verriegelungslasche;
Fig. 6: durch Hilfsentsicherung freigegebene Verriegelungslasche und
Fig. 7A und 7C: zwei Ansichten der Sicherungseinrichtung.

Die Figuren zeigen Ausbildungen einer Verriegelungsvorrichtung für eine Schaltschranktür, bzw. eines Türrahmens (welcher im folgenden der Schaltschranktür gleichgestellt sei) eines in einem Schaltschrank auf einer Ausfahreinrichtung zwischen einer Betriebsstellung C, einer Teststellung T, und einer Getrenntstellung DC bewegbar angeordneten elektrischen, mehrpoligen Leistungsschalters für Niederspannung, Die Stellungen der Ausfahreinrichtung sind so, dass die Verriegelungsvorrichtung einen Schaltschrankzugang in der Betriebsstellung C und in der Teststellung T sperrt und den Schaltschrankzugang in der Getrenntstellung DC freigibt.

Die Fig. 1 zeigt eine Frontansicht auf einen Schaltschrank mit Leistungsschalter 10, Frontrahmen 14, welche als Schaltschranktür mit rechteckiger Öffnung ausgebildet ist. Auf dem Frontrahmen ist die von außen sichtbare Befestigung (60, 60') des Lagers 40 der Verriegelungslasche 30 und dahinter der Schwenkriegel 20 erkennbar.

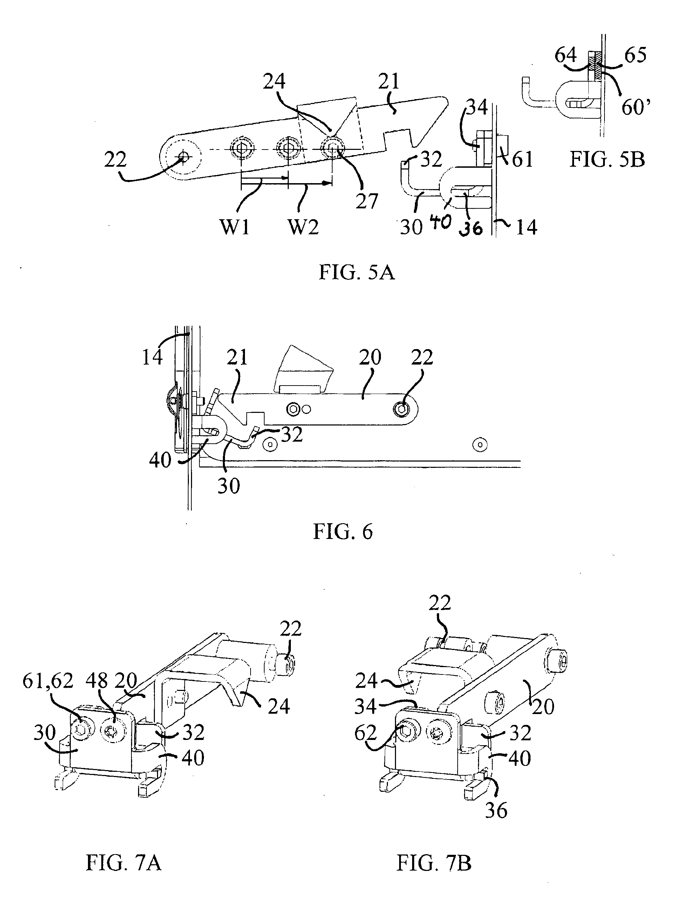

Die Fig. 2 zeigt (einen) Stand der Technik. In der Figur ist die Schaltschranktür weggelassen, so dass der Leistungsschalter 10, der Schwenkriegel 20 mit Klinke 21 sichtbar sind. Die Klinke 21 greift in eine Verriegelungslasche 30 im Lager 40. Das Lager 40 ist an der (weggelassenen) Schaltschranktür in nicht dargestellter Weise befestigt. Von außen kann die Befestigung des Lagers 40 gelöst werden, wobei dann die Teile des Lagers in das Gehäuse des Schaltschranks fallen. Beim Ausfahren des Leistungsschalters in die Getrenntstellung (DC) wird der Schwenkriegel 20 von einem Steuerbolzen 27 betätigt, wobei der Schwenkriegel so verschwenkt wird, dass er außer Eingriff mit der Verriegelungslasche 30 kommt. Vergleiche auch die Darstellung in Fig. 5. Die Schaltschranktür ist dann ohne weiteres zu öffnen.

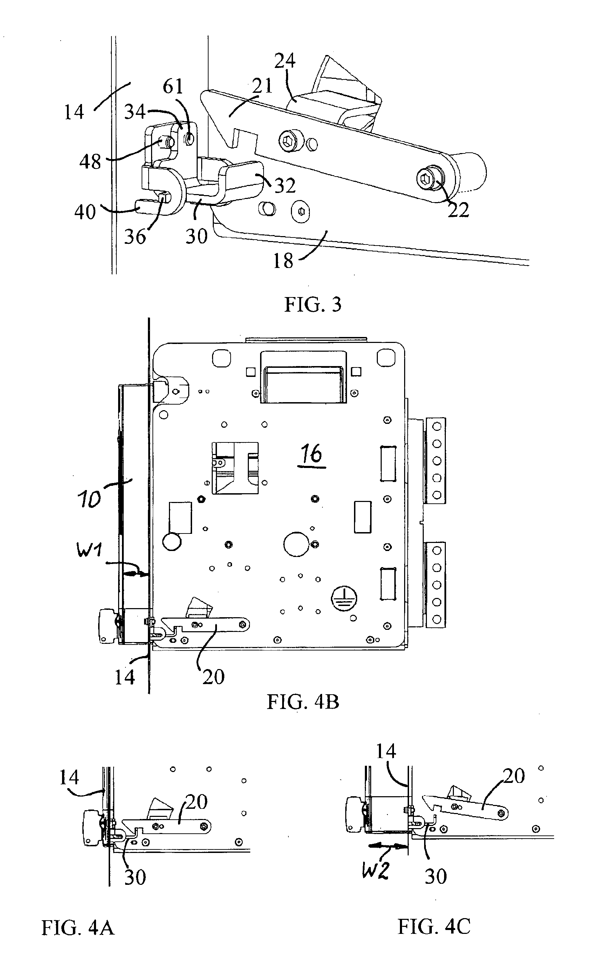

Die Figuren 3 und 4A, 4B, 4C zeigen Einzelheiten der Sicherungseinrichtung: den an einer senkrechten Seitenwand 16 des Schaltschranks befestigten, mit einer Klinke 21 versehenen Schwenkriegel 20; die Verriegelungslasche 30, die an der Innenseite der Schaltschranktür 14 von einem Lager 40 gehalten wird. Die Halterung im Lager 40 hält die Verriegelungslasche 30 in einer instabilen Lage. Bei Freigabe der Halterung dreht sich die Wippe in eine stabile Lage, wobei keine Verhakung zwischen Klinke 21 und Schenkel 32 mehr vorliegt. Der Schwenkriegel 20 liegt durch Eigengewicht in TürSicherungsstellung waagerecht. Der Zugang zum Leistungsschalter wird bei Verhaken von Verriegelungslasche 30 mit Klinke 21 gesperrt. Die Verriegelungslasche 30 ist im Lager 40 in der Tür-Sicherungsstellung fixiert. Die Fixierung kann freigegeben werden durch Angriff mit einem Hilfsentsicherungswerkzeug von der Außenseite der Schaltschranktür 14.

Die Verriegelungslasche 30 ist U-förmig ausgebildet und hat zwei senkrecht angeordnete Schenkel 32, 34. Der eine Schenkel 32 tritt als Riegelhaken mit der Klinke des Schwenkriegels 20 in Wirkverbindung und der andere Schenkel 34 wird innen an der Schaltschranktür 14 von einer Befestigung (60, 60') in Tür-Sicherungsstellung gehalten. Die Verriegelungslasche 30 ist in der in Fig. 3 gezeigten Lage fixiert durch einen Schraubbolzen 61, der die Schaltschranktür 14 durchdringt. In dieser Ausführung ist der Schraubbolzen 61 mit einem, von außen nur mit dem Hilfsentsicherungswerkzeug zu betätigenden Schraubenkopf 62 ausgebildet.

Vorzugsweise ist der Schraubenkopf 62 in einem Vielzackenprofil ausgebildet und das Hilfsentsicherungswerkzeug hat einen korrespondieren Werkzeugkopf.

Der Schwerpunkt der Verriegelungslasche 30 liegt außerhalb des durch den Lagerbolzen 36 gebildeten Drehpunkts. Der Schwerpunkt ist zum Schaltschrankinneren verlagert; bei Lösen der Befestigung 61 der Verriegelungslasche 30 dreht sich die Verriegelungslasche 30 durch Eigengewicht aus der Tür-Sicherungsstellung heraus in die Tür-Freigabestellung in eine stabile Lage.

Die Verriegelungslasche ist als Wippe mit einem Lagerbolzen 36 in dem Lager 40 drehbar gehalten, wobei der Lagerbolzen 36 in einer Lagerbohrung 42 im Lager 40 gehalten ist. Das Lager 40 fungiert auch als Halter für die Wippe, indem das Lager an der Innenseite der Schaltschranktür befestigt ist. Die Art der Befestigung kann verschieden sein. In der Figur 3 ist gezeigt, dass das Lager 40 mit einer die Schaltschranktür durchdringenden Schraube 48 befestigt ist. Das Lager kann auch an der Innenseite der Schaltschrank angeschweißt sein, wodurch die Befestigung von außen weder sichtbar noch zugänglich ist.

Die Verriegelungslasche 30, 32 sperrt den Schaltschrankzugang, wenn sie mit dem Schwenkriegel 20 verhakt ist (in Tür-Verriegelungsstellung) und gibt den Schaltschrankzugang frei, wenn der Schwenkriegel unverhakt ist (in Tür-Freigabestellung).

Die Figuren 4A, AB und 4C zeigen die drei Stellungen der Ausfahreinrichtung: 4A Betriebsstellung C; 4B Teststellung T mit einem Verschiebeweg W1 aus der Betriebsstellung heraus; 4C Getrenntstellung DC mit einem Verschiebeweg W2 aus der Betriebsstellung heraus. In Getrenntstellung DC ist der Schwenkriegel 20 angehoben, der Schaltschrankzugang ist freigegeben.

In Fig. 5A ist die Wirkung des Steuerbolzens 27 dargestellt, der bei Vorschub W2 in die Getrenntstellung den Schwenkriegel 20 betätigt. An der Ausfahreinrichtung oder an dem Leistungsschalter 10 ist ein Steuerbolzen 27 vorhanden. Der Schwenkriegel 20 ist im Lager 22 drehbar gelagert. Während der Ausfahrbewegung der Ausfahreinrichtung tritt der Steuerbolzen 27 bei Erreichen der Getrenntstellung DC in Wirkverbindung mit der Steuerkontur 24 am Schwenkriegel 20. Die Steuerkontur 24 ist zum Teil auch in der Fig. 3 sichtbar. Nach dem Verschiebeweg der Länge W2 hebt die Kontur 24 den Schwenkriegel mit Klinke 21 an. Dieser kommt mit dem senkrechten Schenkel 32 der Verriegelungslasche 30 außer Eingriff, die Tür-Freigabestellung ist erreicht.

Zu Fig. 5B: Hier ist eine Befestigung des Lagers 40 der Verriegelungslasche 30 als magnetische Vorrichtung 61' gezeigt. An der Innenseite der Schaltschranktür 14, die unmagnetisch ausgebildet sein sollte, ist ein erster magnetischer Körper (Magnetblech 64) befestigt, der mit einem zweiten magnetischer Körper (Haltemagnet 65) zusammenwirkt. Der Haltemagnet 65 ist im senkrechten Schenkel 34 Verriegelungslasche 30 eingebracht. Durch Zusammenwirkung des Haltemagneten 65 mit dem Magnetblech 64 wird die Verriegelungslasche 30 in Tür-Sicherungsstellung gehalten. Die Befestigung 61' ist mit einem die Haltekraft des Haltemagneten 65 überwindenden magnetischen Hilfsentsicherungswerkzeug lösbar. Der Vorteil dieser Anordnung liegt besonders darin, dass die Befestigung (61') von außen nicht sichtbar ist.

In der Fig. 6 ist ein Schaltschrank 10 in seiner Betriebsstellung gezeigt. Der Schwenkriegel 20 liegt waagerecht in (normaler) Verriegelungsposition. Die Klinke 21 des Schwenkriegels 20 ist jedoch ohne Eingriff mit der Verriegelungslasche 30, da die Befestigung der Verriegelungslasche von der Schranktür gelöst ist. Die Sicherungseinrichtung ist durch die Hilfsentsicherung freigegeben. Durch ihr Eigengewicht ist die Verriegelungslasche aus der Halteposition herausgekippt.

Die Figuren 7A und 7C zeigen zwei Ansichten der Sicherungseinrichtung. Die Einzelheiten und Bezugszeichen sind zuvor schon dargestellt und beschrieben worden. Die Sicherungseinrichtung (20, 30) hauptsächlich bestehend aus Schwenkriegel, Verriegelungslasche (Wippe), Halterung usw. kann auf einer Seite der Schaltschranktür - wie in Fig. 1, dort auf der rechten Seite -, oder sogar auf beiden Seiten der Schaltschranktür 14 angeordnet sein. Um einen schnellen Einbau auf einer der Seiten oder einen einfachen Wechsel von einer Seite zur anderen vornehmen zu können, sind die Teile der Sicherungseinrchtung (20, 30) so ausgebildet, dass Sie für jede Seite verwendet werden können. Dabei ist die Steuerkontur 24 an einer am Schwenkriegel 20 befestigten Lasche ausgebildet, und die Lasche lässt sich an jeder Seite des Schwenkriegels 20 befestigen (wie in Fig. 7A und 7B). Ebenso ist die Anbringung der Lagerung 22 des Schwenkriegels 20 zu beiden Seiten des Schwenkriegels möglich (auch dargestellt in Fig. 7A und 7B). Wesentlich ist hierbei, dass die Lasche und die Lagerung 22 des Schwenkriegels 20 auf jener Seite des Schwenkriegels anordenbar ist, die dem Inneren des Schaltschranks zugewandt ist.

Nicht in den Figuren erkennbar ist, dass die Schaltschranktür 14 um die senkrechte Achse drehbar in mindestens einen Scharnier gelagert ist und die Sicherungseinrichtung 20,30 an der dem mindestens einem Scharnier gegenüberliegenden Seite der Schaltschranktür 14 angeordnet ist. Als Alternative kann auch je eine Sicherungseinrichtung 20,30 zu beiden Seiten des Einschubrahmens 14 angeordnet sein.

### Bezugszeichen

- C: Betriebsstellung (connect)
- DC: Trennstellung (disconnect)
- T: Teststellung
- W1: Verfahrweg von Betriebsstellung in Teststellung
- W2: Verfahrweg von Betriebsstellung in Trennstellung
- 10: auf einer Ausfahreinrichtung bewegbarer Leistungsschalter
- 14: als Rahmen ausgebildete Schaltschranktür mit rechteckiger Öffnung
- 16: senkr. Seitenwand
- 20: einarmiger, drehgelagerter Schwenkriegel durch Eigengewicht waagerecht liegend
- 21: Klinke am Schwenkriegel
- 22: Drehlager
- 24: Kontur am Schwenkriegel in Wirkzusammenhang mit Steuerbolzen
- 27: Steuerbolzen am Positionsabfrageblech
- 20, 30: Sicherungseinrichtung
- 30: Verriegelungslasche U-förmig
- 32: erster U-Schenkel Riegelhaken
- 34: zweiter U-Schenkel
- 36: Lagerbolzen
- 40: Lager (Halter) der Verriegelungslasche 30
- 42: Bohrung
- 48: Befestigungspunkt des Halters (Schraube oder Verschweißung)
- 60: Befestigung
- 60': magnetische Befestigung
- 61: Schraubbolzen
- 62: Schraubenkopf (Torx o.ä.)
- 64: Magnetblech
- 65: Haltemagnet

## Patentansprüche

1. Verriegelungsvorrichtung für eine Schaltschranktür, bzw. eines Türrahmens, eines in einem Schaltschrank auf einer Ausfahreinrichtung zwischen einer Betriebsstellung (C), einer Teststellung (T), und einer Getrenntstellung (DC) bewegbar angeordneten elektrischen, mehrpoligen Leistungsschalters (10), insbesondere für Niederspannung,
- wobei die Verriegelungsvorrichtung einen Schaltschrankzugang in der Betriebsstellung (C) und in der Teststellung (T) sperrt und den Schaltschrankzugang in der Getrenntstellung (DC) freigibt,
- und wobei eine Sicherungseinrichtung für die Verriegelungsvorrichtung vorhanden ist, die bei Betätigung einer Hilfsentsicherung (20, 30) von der Außenseite der Schaltschranktür (14) aus in den beiden Stellungen Betriebsstellung (C) und Teststellung (T) auch in den beiden gesperrten Stellungen (C, T) den Schaltschrankzugang ermöglicht, wobei die Sicherungseinrichtung besteht aus
- einem an einer senkrechten Seitenwand (16) des Schaltschranks befestigten, mit einer Klinke (21) versehenen Schwenkriegel (20),
- und einer an der Innenseite der Schaltschranktür von einem Lager (40) gehaltenen und mit der Klinke (21) verhakenden, die Sperrung des Zugangs herstellenden Verriegelungslasche (30), wobei der Schwenkriegel (20) durch Eigengewicht in Tür-Sicherungsstellung liegt,
- und die Hilfsentsicherung darin besteht, dass die Verriegelungslasche (30) im Lager (40) in einer mit einem von der Außenseite der Schaltschranktür (14) angreifenden Hilfsentsicherungswerkzeug zu verändernde Stellung in der Tür-Sicherungsstellung fixiert ist,
**dadurch gekennzeichnet, dass** die Verriegelungslasche (30) als Wippe in dem Lager (40) drehbar gehalten ist, in dem die Verriegelungslasche (30) eine mit dem Schwenkriegel (20) verhakt den Schaltschrankzugang sperrende Tür-Verriegelungsstellung und eine mit dem Schwenkriegel unverhakt den Schaltschrankzugang freigegebene Tür-Freigabestellung einnehmen kann, und die Verriegelungslasche (30) die Tür-Freigabestellung nach Angriff mit dem Hilfsentsicherungswerkzeug einnimmt durch Drehung durch Eigengewicht aus der Tür-Sicherungsstellung heraus in die Tür-Freigabestellung.

2. Verriegelungsvorrichtung für eine Schaltschranktür nach Anspruch 1, **dadurch gekennzeichnet, dass** die Verriegelungslasche (30) als Wippe mit Lagerbolzen (36) ausgebildet ist, wobei der Lagerbolzen (36) in einer Lagerbohrung (42) im Halter (40) gehalten ist, und die Verriegelungslasche (30) als U-förmige Verriegelungslasche mit zwei senkrecht angeordneten Schenkeln (32, 34) ausgebildet ist, wobei der eine Schenkel (32) als Riegelhaken mit der Klinke des Schwenkriegels (20) in Wirkverbindung tritt und der andere Schenkel (34) innen an der Schaltschranktür (14) von der Befestigung (60, 60') in Tür-Sicherungsstellung gehalten wird.

3. Verriegelungsvorrichtung für eine Schaltschranktür nach Anspruch 1 oder 2, **dadurch gekennzeichnet, dass** eine Befestigung (60') des Lagers (40) der Verriegelungslasche (30) als magnetische Vorrichtung bestehend aus einem an den Innenseite der Schaltschranktür (14) angeordneten Magnetblech (65) und einem in dem Halter (40) eingebrachten Haltemagnet (64) gebildet ist, und die Verriegelungslasche (30) durch Zusammenwirkung des Haltemagneten (64) mit dem Magnetblech (65) in Tür-Sicherungsstellung gehalten wird und die Befestigung (60') der Verriegelungslasche (30) mit einem die Haltekraft des Haltemagneten (64) überwindenden magnetischen Hilfsentsicherungswerkzeug lösbar ist.

4. Verriegelungsvorrichtung für eine Schaltschranktür nach Anspruch 1 oder 2, **dadurch gekennzeichnet, dass** eine Befestigung (60) des Lagers (40) der Verriegelungslasche (30) in Form einem die Schaltschranktür (14) und die Verriegelungslasche (30) durchdringenden und die Verriegelungslasche (30) in Tür-Sicherungsstellung im Lager (40) haltenden Schraubbolzen (61) besteht, und der Schraubbolzen (61) mit einem, nur mit dem Hilfsentsicherungswerkzeug zu betätigenden Schraubenkopf (62) ausgebildet ist.

5. Verriegelungsvorrichtung für eine Schaltschranktür nach Anspruch 4, **dadurch gekennzeichnet, dass** der Schraubenkopf (62) in einem Vielzackenprofil ausgebildet ist.

6. Verriegelungsvorrichtung für eine Schaltschranktür nach einem der vorhergehenden Ansprüche, **dadurch gekennzeichnet, dass** an der Ausfahreinrichtung oder an dem Leistungsschalter (10) ein Steuerbolzen (27 vorhanden ist und mitbewegt wird, der während der Ausfahrbewegung der Ausfahreinrichtung bei Erreichen der Getrenntstellung (DC) in Wirkverbindung tritt mit einer am Schwenkriegel (20) angeordneten Steuerkontur (24), wodurch der Schwenkriegel (20) von der verhakten in die unverhakte Stellung mit der Verriegelungslasche tritt.

7. Verriegelungsvorrichtung für eine Schaltschranktür nach einem der vorhergehenden Ansprüche, **dadurch gekennzeichnet, dass** die Schaltschranktür (14) um eine senkrechte Achse drehbar in mindestens einem Scharnier gelagert ist, und die Sicherungseinrichtung (20,30) an der dem mindestens einen Scharnier gegenüberliegenden Seite der Schaltschranktür (14) angeordnet ist.

8. Verriegelungsvorrichtung für eine Schaltschranktür nach einem der Ansprüche 1 bis 6, **dadurch gekennzeichnet, dass** je eine Sicherungseinrichtung (20,30) zu beiden Seiten der Schaltschranktür (14) angeordnet ist.

9. Verriegelungsvorrichtung für eine Schaltschranktür nach einem der Ansprüche 6 bis 8, **dadurch gekennzeichnet, dass** die Steuerkontur (24) an einer am Schwenkriegel (20) befestigten Lasche ausgebildet ist.

10. Verriegelungsvorrichtung für eine Schaltschranktür nach einem der Ansprüche 6 bis 9, **dadurch gekennzeichnet, dass** die Lasche und die Lagerung (22) des Schenkriegels (20) auf jener Seite des Schwenkriegels (20) angeordnet ist, die dem Inneren des Schaltschranks zugewandt ist.

## Claims

1. Locking device for a switch cabinet door, or of a door frame, of a multipolar electrical circuit breaker (10), in particular for low voltage, which is arranged in a switch cabinet on an extension means so as to be movable between an operating position (C), a test position (T) and a disconnected position (DC),
- the locking device prohibiting access to the switch cabinet in the operating position (C) and in the test position (T), and allowing access to the switch cabinet in the disconnected position (DC),
- and a securing means being provided for the locking device, which securing means allows access to the switch cabinet when an auxiliary release means (20, 30) is actuated from the outside of the switch cabinet door (14) in the two positions operating position (C) and test position (T), and also in the two locked positions (C, T), the securing means consisting of
- a pivoting bolt (20) which is provided with a latch (21) and is fixed to a vertical side wall (16) of the switch cabinet,
- and a locking tab (30) which is held on the inside of the switch cabinet door by a support (40) and interlocks with the latch (21), thereby prohibiting access, the pivoting bolt (20) being located in the door-securing position due to its own weight,
- and the auxiliary release means consists in the locking tab (30) in the support (40), which tab is in a position to be changed by means of an auxiliary release tool acting from the outside of the switch cabinet door (14), being fixed in the door-securing position,
**characterised in that** the locking tab (30) is rotatably held in the support (40) as a rocker, in which support the locking tab (30) can occupy a door-locking position in which it is interlocked with the pivoting bolt (20) and prohibits access to the switch cabinet, and a door-release position in which it is not interlocked with the pivoting bolt and allows access to the switch cabinet, and the locking tab (30), after it is acted upon by the auxiliary release tool, occupies the door-release position as a result of rotation due to its own weight out of the door-securing position into the door-release position.

2. Locking device for a switch cabinet door according to claim 1, **characterised in that** the locking tab (30) is in the form of a rocker having a bearing pin (36), the bearing pin (36) being held in a bearing hole (42) in the holder (40), and the locking tab (30) being in the form of a U-shaped locking tab having two perpendicularly arranged branches (32, 34), one branch (32) entering into an operative connection as a locking hook with the latch of the pivoting bolt (20), and the other branch (34) being held in the door-securing position on the inside of the switch cabinet door (14) by the fastening (60, 60').

3. Locking device for a switch cabinet door according to either claim 1 or claim 2, **characterised in that** a fastening (60') of the support (40) of the locking tab (30) is in the form of a magnetic device consisting of a magnetic plate (65) which is arranged on the inside of the switch cabinet door (14) and a holding magnet (64) placed in the holder (40), and the locking tab (30) is held in the door-securing position by interaction between the holding magnet (64) and the magnetic plate (65), and the fastening (60') of the locking tab (30) can be released by means of a magnetic auxiliary release tool overcoming the holding force of the holding magnet (64).

4. Locking device for a switch cabinet door according to either claim 1 or claim 2, **characterised in that** a fastening (60) of the support (40) of the locking tab (30) is in the form of a threaded bolt (61) penetrating the switch cabinet door (14) and the locking tab (30) and holding the locking tab (30) in the door-securing position in the support (40), and the threaded bolt (61) is designed to have a screw head (62) which can only be operated using the auxiliary release tool.

5. Locking device for a switch cabinet door according to claim 4, **characterised in that** the screw head (62) is formed as a profile having a plurality of teeth.

6. Locking device for a switch cabinet door according to any of the preceding claims, **characterised in that** there is a control bolt (27) on the extension means or on the circuit breaker (10) and is moved together therewith, which bolt, during the extension movement of the extension means, enters into an operative connection with a control contour (24) which is arranged on the pivoting bolt (20) when the disconnected position (DC) is reached, as a result of which the pivoting bolt (20) moves from the position in which it is interlocked with the locking tab into the position in which it is not interlocked therewith.

7. Locking device for a switch cabinet door according to any of the preceding claims, **characterised in that** the switch cabinet door (14) is mounted in at least one hinge so as to be rotatable about a vertical axis, and the securing means (20, 30) is arranged on the side of the switch cabinet door (14) which is opposite the at least one hinge.

8. Locking device for a switch cabinet door according to any of claims 1 to 6, **characterised in that** a securing means (20, 30) is arranged on each side of the switch cabinet door (14).

9. Locking device for a switch cabinet door according to any of claims 6 to 8, **characterised in that** the control contour (24) is formed on a tab which is fixed to the pivoting bolt (20).

10. Locking device for a switch cabinet door according to any of claims 6 to 9, **characterised in that** the tab and the bearing (22) of the pivoting bolt (20) are arranged on the side of the pivoting bolt (20) which faces the inside of the switch cabinet.

## Revendications

1. Dispositif de verrouillage pour une porte d'armoire de distribution, respectivement d'un cadre de porte, d'un disjoncteur (10) électrique, multipolaire, en particulier destiné aux basses tensions, disposé de manière mobile dans une armoire de distribution sur un dispositif de déploiement, entre une position de service (C), une position de test (T) et une position de séparation (DC),
- le dispositif de verrouillage bloquant tout accès à l'armoire de distribution dans la position de service (C) et dans la position de test (T), tout en autorisant l'accès à l'armoire de distribution dans la position de séparation (DC), et
- un dispositif de blocage étant présent pour le dispositif de verrouillage qui, lors de l'actionnement d'un dispositif de déverrouillage auxiliaire (20, 30) depuis la face externe de la porte (14) de l'armoire de distribution, permet l'accès à l'armoire de distribution dans les deux positions « Position de service » (C) et « Position de test » (T), y compris dans les deux positions verrouillées (C, T), le dispositif de blocage étant composé des éléments suivants :
- un pêne tournant (20) équipé d'un loquet (21) et fixé à une cloison latérale (16) verticale de l'armoire de distribution,
- et une patte de verrouillage (30) assurant le blocage de l'accès, s'accrochant au loquet (21) et maintenue par un palier (40) au niveau de la face interne de la porte de l'armoire de distribution, le pêne tournant (20) reposant dans la position de blocage de la porte du fait de son propre poids,
- et le dispositif de déverrouillage auxiliaire consiste en ce que la patte de verrouillage (30) qui se trouve dans le palier (40), dans une position à modifier au moyen d'un instrument de déverrouillage auxiliaire qui agit de la face externe de la porte (14) de l'armoire de distribution, est fixée dans la position de blocage de la porte,
**caractérisé en ce que** la patte de verrouillage (30) est maintenue pivotante en tant que bascule dans le palier (40), dans lequel la patte de verrouillage (30) peut prendre une position de verrouillage de la porte bloquant l'accès à l'armoire de distribution lorsqu'elle est accrochée au pêne tournant (20) et prendre une position de libération de la porte autorisant l'accès à l'armoire de distribution lorsqu'elle est décrochée du pêne tournant, et la patte de verrouillage (30) prend la position de libération de la porte après l'engagement avec l'instrument de déverrouillage auxiliaire par rotation du fait de son propre poids, depuis la position de blocage de la porte vers la position de libération de la porte.

2. Dispositif de verrouillage pour une porte d'armoire de distribution selon la revendication 1, **caractérisé en ce que** la patte de verrouillage (30) est conçue en tant que bascule avec un boulon de palier (36), le boulon de palier (36) étant maintenu dans le support (40) dans un alésage de palier (42), et la patte de verrouillage (30) est conçue en tant que patte de verrouillage en forme de « U » avec deux montants (32, 34) disposés à la verticale, l'un des montants (32) entrant en liaison d'actionnement avec le loquet du pêne tournant (20) et servant de crochet de verrouillage, et l'autre montant (34) étant maintenu dans la position de blocage de la porte par la fixation (60, 60') à l'intérieur au niveau de la porte (14) de l'armoire de distribution.

3. Dispositif de verrouillage pour une porte d'armoire de distribution selon la revendication 1 ou 2, **caractérisé en ce qu'**une fixation (60') du palier (40) de la patte de verrouillage (30) est conçue en tant que dispositif magnétique composé d'une tôle magnétique (65) disposée au niveau de la face intérieure de la porte (14) de l'armoire de distribution et d'un aimant de maintien (64) mis en place dans le support (40), et la patte de verrouillage (30) est maintenue en position de blocage de la porte par l'interaction de l'aimant de maintien (64) avec la tôle magnétique (65) et la fixation (60') de la patte de verrouillage (30) peut être libérée au moyen d'un instrument magnétique de déverrouillage auxiliaire surmontant la force de fixation de l'aimant de maintien (64).

4. Dispositif de verrouillage pour une porte d'armoire de distribution selon la revendication 1 ou 2, **caractérisé en ce qu'**une fixation (60) du palier (40) de la patte de verrouillage (30) existe sous la forme d'un bouton fileté (61) pénétrant dans la porte (14) de l'armoire de distribution et la patte de verrouillage (30) et maintenant la patte de verrouillage (30) dans le palier (40) en position de blocage de la porte et le bouton fileté (61) est conçu avec une tête de vis (62) qui ne peut être actionnée qu'au moyen de l'instrument de déverrouillage auxiliaire.

5. Dispositif de verrouillage pour une porte d'armoire de distribution selon la revendication 4, **caractérisé en ce que** la tête de vis (62) est conçue dans une exécution de profilé à dents multiples.

6. Dispositif de verrouillage pour une porte d'armoire de distribution selon l'une des revendications précédentes, **caractérisé en ce qu'**un boulon de guidage (27) est présent et est entraîné au niveau du dispositif de déploiement ou au niveau du disjoncteur (10), et entre en liaison d'actionnement avec un contour de commande (24), disposé au niveau du pêne tournant (20), pendant le mouvement de déploiement du dispositif de déploiement, lorsque la position de séparation (DC) est atteinte, le pêne tournant (20) entrant avec la patte de verrouillage de la position accrochée à la position décrochée.

7. Dispositif de verrouillage pour une porte d'armoire de distribution selon l'une des revendications précédentes, **caractérisé en ce que** la porte (14) de l'armoire de distribution est logée dans au moins une charnière de manière pivotante autour d'un axe vertical, et le dispositif de blocage (20, 30) est disposé au niveau de la face de la porte (14) de l'armoire de distribution située à l'opposée d'au moins une charnière.

8. Dispositif de verrouillage pour une porte d'armoire de distribution selon l'une des revendications 1 à 6, **caractérisé en ce qu'**un dispositif de blocage (20, 30) est disposé respectivement des deux côtés de la porte (14) de l'armoire de distribution.

9. Dispositif de verrouillage pour une porte d'armoire de distribution selon l'une des revendications 6 à 8, **caractérisé en ce que** le contour de commande (24) est conçu au niveau d'une patte fixée au pêne tournant (20).

10. Dispositif de verrouillage pour une porte d'armoire de distribution selon l'une des revendications 6 à 9, **caractérisé en ce que** la patte et le logement (22) du pêne tournant (20) sont disposés sur le côté du pêne tournant (20) qui fait face à la partie intérieure de l'armoire de distribution.
